# EUROPEAN PATENT APPLICATION

(11) **EP 3 650 674 A1**
(43) Date of publication of application: **13.05.2020**
(21) Application number: 18205188.8
(22) Date of filing: 08.11.2018
(51) Int. Cl.: F02C 3/30, F02C 9/20

(54) **METHOD FOR OPERATING A GAS TURBINE ENGINE AND GAS TURBINE ENGINE**

(71) Applicant: General Electric Company, Schenectady, NY 12345 (US)
(72) Inventor: WIFLING, Ronald, 5400 Baden-Aargau (CH); CUEVAS ALVAREZ, Jose Antonio, 5400 Baden-Aargau (CH); DOUBLET, Christophe, 5400 Baden-Aargau (CH); KAPOOR, Tarun, 5400 Baden-Aargau (CH)
(74) Representative: Freigutpartners IP Law Firm

(57) **Abstract**

Disclosed is a method for operating a gas turbine engine comprising an inlet volume flow control appliance (11) suitable to control a compressor (10) gas mass flow. The method comprises operating the gas turbine engine with the inlet volume flow control appliance (11) set to operate the gas turbine engine with a compressor inlet volume flow below a maximum compressor inlet volume flow, and adding a mass flow (ṁ_{Liq}) of a liquid agent to a compressor gas mass flow while the inlet volume flow control appliance is set to operate the gas turbine engine with a compressor inlet volume flow below a maximum compressor inlet volume flow. The mass flow (ṁ_{Liq}) of a liquid agent may in instances be controlled as a function of the pitch (VIGV) of variable inlet guide vanes which are provided as the inlet volume flow control appliance. The method further comprises adjusting the volume flow control appliance (11) to increase the compressor inlet volume flow and increasing the mass flow of liquid agent added to the compressor gas mass flow while the inlet volume flow control appliance is adjusted to increase the compressor inlet volume flow at least during a part of the process of adjusting the volume flow control appliance.

## Description

### TECHNICAL FIELD

The present disclosure relates to a method and a gas turbine engine as set forth in the claims.

### BACKGROUND OF THE DISCLOSURE

Load changes in the operation of gas turbine engines result in temperature variations, not only in the combustor and turbine, but also in the compressor, due to the changing pressure ratio, which in turn results in variable temperature rise during compression. This holds in particular true in operation states in which the load variation is related to a change of the compressor mass flow. The compressor mass flow may be controlled by a compressor inlet volume flow control appliance suitable to control a compressor volume flow to the inlet of a compressor of the gas turbine engine, and hence the compressor mass flow at constant inlet fluid temperature and pressure. The compressor mass flow as referred to in this context is in particular a compressor inlet mass flow, and in particular a gaseous fluid mass flow. In an air breathing engine, this compressor gas mass flow relates to a compressor air mass flow, and in particular to the compressor inlet air mass flow. Due to the flow characteristics of a downstream turbine the pressure ratio strongly varies with the compressor mass flow, in particular when the turbine inlet temperature is controlled to be more or less constant, or even rises with a rising mass flow, and the temperature in the compressor and in particular in the most downstream compressor stages is strongly correlated to the compressor pressure ratio, and thus, under the conditions noted above, as are present in a gas turbine engine, to the compressor mass flow or inlet volume flow.

Appliances suitable to control a compressor mass flow, in particular in controlling a compressor inlet volume flow, are known to those skilled in the art and comprise, while not being limited to, a variable inlet guide vane row provided upstream a first row of running compressor blades or generally one or more rows of variable compressor vanes. A variable inlet guide vane row will be readily understood as a row of guide vanes with an adjustable pitch. The adjustable pitch of the vanes is in this context to be understood as the pitch angle of the airfoils, for instance the angle of the chord line of the vanes in relation to a normal to the compressor inlet cross section.

Changes of the temperature inside the flow path of a gas turbine engine may, due to the different thermal inertia of components, result in non-matching thermal expansion of components and may cause rubbing with related enhanced wear or damage, or, to the contrary, yield excess gaps. In any case, suboptimal engine performance may result, and the component lifetime may be negatively impacted.

### OUTLINE OF THE SUBJECT MATTER OF THE PRESENT DISCLOSURE

It is an objective of the present disclosure to provide a method and a gas turbine engine as initially mentioned. In one more specific aspect a method shall be disclosed which reduces thermal gradients over time inside the compressor of a gas turbine engine. In more specific aspects the method shall be suitable to reduce thermal gradients over time inside the compressor of a gas turbine engine while the pressure ratio of the compressor operation changes. In more specific aspects the herein disclosed subject matter strives for reducing thermal gradients over time inside the compressor of a gas turbine engine while modulating the compressor mass flow, and in particular the compressor inlet mass flow, and more in particular a compressor inlet air mass flow, i.e. while said mass flow changes. In a more generic aspect the method is intended to reduce differential thermal expansion, and, more specifically, rubbing of components, inside the compressor of a gas turbine engine.

This is achieved by the subject matter described in claim 1.

Further effects and advantages of the disclosed subject matter, whether explicitly mentioned or not, will become apparent in view of the disclosure provided below.

Accordingly, disclosed is a method for operating a gas turbine engine, the gas turbine engine comprising an inlet volume flow control appliance suitable to control a compressor inlet volume flow. It will be readily appreciated that, in controlling the inlet volume flow, the inlet volume flow appliance is also suitable to control a compressor gas mass flow, whereas the mass flow is further influenced for instance by the temperature and pressure of the gas at the compressor inlet, whereas the volume flow is controlled by the inlet volume flow control appliance independent of such uncontrollable parameters. The method comprises operating the gas turbine engine with the inlet volume flow control appliance set to operate the gas turbine engine with a compressor inlet volume flow below a maximum compressor inlet volume flow. A mass flow of a liquid agent is added to the compressor gas mass flow while the inlet mass flow control appliance is set to operate the gas turbine engine with a compressor inlet volume flow below the maximum compressor inlet volume flow. The disclosed method further comprises adjusting the volume flow control appliance to change the compressor inlet volume flow and controlling the mass flow of liquid agent at least during a part of the process of adjusting the volume flow control appliance. Controlling the mass flow of liquid agent shall in this respect not be understood as mandatorily performing a closed loop control, but may be understood synonymously to changing, varying or adjusting. Controlling the mass flow of liquid agent comprises at least one of increasing the mass flow of liquid agent added to the compressor gas mass flow when the inlet volume flow control appliance is adjusted to increase the compressor inlet volume flow, and/or decreasing the mass flow of liquid agent added to the compressor gas mass flow when the inlet volume flow control appliance is adjusted to decrease the compressor inlet volume flow.

It is noted that within the framework of the present disclosure the use of the indefinite article "a" or "an" does in no way stipulate a singularity nor does it exclude the presence of a multitude of the named member or feature. It is thus to be read in the sense of "at least one" or "one or a multitude of".

Non-limiting examples of inlet volume flow control appliances are outlined above.

It is understood that the flow through the compressor heats up while it is compressed. It is known from the art to inject a liquid agent into a compressor mass flow of a gas turbine engine in order to augment power output above a rated maximum power output without the injection of a liquid agent into the compressor mass flow. Evaporation of the liquid agent yields an internal cooling of the compressor, which may under certain instances reduce compressor power consumption and allows to burn more fuel without exceeding a maximum admissible turbine inlet temperature. As a power augmentation technique adding liquid agent to a compressor mass flow is commonly only applied when operating the gas turbine engine at or above a power output achieved in providing a maximum compressor inlet volume flow and maximum admissible turbine inlet temperature. In other words, an injection or other addition of liquid agent to a compressor mass flow is commonly only applied when a compressor inlet volume flow control appliance is set to operate the gas turbine engine with a maximum compressor inlet volume flow.

The inventors have discovered that an addition of liquid agent to a compressor mass flow may also be useful to mitigate certain issues with non-stationary engine operation and fast changing engine power output outlined above in that the internal cooling caused by evaporation of the liquid agent inside the compressor may offset the increase of adiabatic temperature rise, for instance when the pressure ratio is rapidly changed by changing the compressor inlet volume flow due to a rise of the ambient temperature at a constant absolute Megawatts power output and/or a rise of the compressor gas mass flow to increase absolute Megawatts power output, or a combination thereof.

In embodiments, the method comprises controlling, for instance increasing or decreasing, the mass flow of liquid agent added to the compressor air mass flow while changing the power output of the gas turbine engine. In more particular embodiments, the mass flow of liquid agent is increased when increasing the power output of the gas turbine engine and/or is decreased when decreasing the power output of the gas turbine engine. Thus, when increasing the power output of the gas turbine engine and accordingly the pressure ratio, increasing internal cooling is provided to the compressor which results in at least reducing the temperature increase inside the compressor over time while increasing the power output. When decreasing the power output of the gas turbine engine and accordingly the pressure ratio, decreasing internal cooling is provided to the compressor which results in at least reducing the temperature decrease inside the compressor over time while decreasing power output. Reducing temperature gradients over time may accordingly be achieved. Lowering maximum operating temperatures inside the compressor as well as reducing temperature gradients are helpful in mitigating certain issues outline above.

It is noted that control of the added mass flow of liquid agent dependent on the power output may be performed continuously or in discontinuous steps over the power output and/or the compressor inlet volume flow. I.e., when drawing the mass flow of added liquid agent versus the power output of the gas turbine engine or the compressor inlet volume flow, or the setting of a compressor inlet volume flow appliance, respectively, the resulting graph may be continuous or may exhibit steps or jumps.

The power output of the gas turbine engine referred to above may be at least one of an absolute Megawatts power output and a relative power output related to a rated maximum power output of the gas turbine engine under the actually present ambient conditions, and with or without liquid agent supply to the compressor mass flow. It is known that the rated power output of a gas turbine engine changes with the ambient conditions. If, for instance, the ambient temperature rises while all other operating parameters remain constant the rated maximum power output will decrease. The same Megawatts power output at a higher ambient temperature will result in a higher relative power output. The skilled person is readily aware of the calculation of a relative power output from an absolute Megawatts power output based upon specific ambient conditions, and is familiar of calculating the actual rated power output at any conditions from a rated power output at reference conditions, for instance at ISO 2533 reference conditions.

The liquid agent may, at least in part, be provided to the compressor gas mass flow upstream of a first row of rotating compressor blades.

The inlet volume flow control appliance may in embodiments comprise at least one row of variable guide vanes. At least one row of variable guide vanes may be arranged upstream of a first row of rotating compressor blades so as to constitute a variable inlet guide vane row.

Changing the power output of the gas turbine engine may in certain aspects of the herein disclosed subject matter comprise changing the setpoint of the inlet volume flow control appliance so as to change the compressor inlet volume flow with the same sign as the change of the power output. For instance, operating a gas turbine engine at a constant absolute Megawatts power output while the ambient temperature rises results in an increase of the relative power output, as outlined above. With the same volume flow, the mass flow would decrease, and thus, to maintain the Megawatts power output, it might, dependent upon the gas turbine engine's operating regime, be required to increase the inlet volume flow at least to the extent to maintain the mass flow.

In aspects, the mass flow of the liquid agent to the compressor gas mass flow may be controlled dependent upon at least one of the setpoint and/or actual setting of the inlet volume flow control appliance. In other aspects, the mass flow of the liquid agent to the compressor gas mass flow may be controlled dependent upon at least one of: a compressor discharge pressure and/or a compressor pressure ratio. In still further aspects, the mass flow of the liquid agent to the compressor gas mass flow may be controlled dependent upon a gradient of at least one of the compressor discharge pressure and/or compressor pressure ratio. Said gradient is a gradient over time. It is understood that the compressor pressure ratio is a ratio of the total pressure at the compressor outlet to the total pressure at the compressor inlet. It is further appreciated that, while from a dogmatic standpoint the compressor pressure ratio would be the correct parameter to be applied, in particular for a stationary engine the ambient pressure and thus the total pressure at the compressor inlet varies so little that applying the discharge pressure may yield by far sufficient accuracy for the control. The skilled person will readily appreciate that the discharge pressure in this context is a total pressure, including any dynamic pressure components.

In still further aspects, the method may comprise determining at least one temperature inside the compressor or downstream the compressor and upstream a combustor. The temperature may for instance be determined in one or between two of the most downstream compressor stages, or in a plenum downstream the compressor and upstream a combustor. The mass flow of the liquid agent provided to the compressor gas mass flow may then be dependent upon at least one of said temperatures and/or a gradient of at least one of said temperatures. The mass flow of the liquid agent may in instances be controlled to maintain the temperature constant or below a threshold, or so as to maintain the gradient of the temperatures over time below a threshold.

The mass flow of the liquid agent may be controlled continuously and/or in discrete steps or increments. Said choice may be made dependent upon the applied hardware for discharging the liquid agent to the compressor gas mass flow. While a continuous control may yield certain advantages, a control in a stepped manner may be found easer to implement. Moreover, the hardware may comprise a number of liquid agent discharge stages which can be simply switched on and off, which in turn yields cost savings and may facilitate control. However, a continuous control may apparently yield an improved control accuracy, if required.

In embodiments, the method may comprise gradually decreasing the mass flow of the liquid agent after a delay time once a stationary power output has been reached. This may result in efficiency improvements. On the downside, this results in higher temperatures in the most downstream compressor stages. Moreover, the liquid agent provision to the compressor gas mass flow then is not available during a subsequent power output decrease and the related decreasing temperatures in the compressor. It is apparent that, due to different thermal inertia, comparatively fast cooling inside the compressor may yield in comparable issues with rubbing and/or excessive gaps as fast heating.

In other aspects, a gas turbine engine is disclosed which comprises a compressor and an appliance for providing a mass flow of liquid agent to a compressor gas mass flow, wherein further a control device is provided and configured to perform a method as outlined above. The gas turbine engine may further comprise an inlet volume flow control appliance suitable to control a compressor gas mass flow. The inlet volume flow control appliance may comprise a row of inlet guide vanes with variable pitch.

It is understood that the features and embodiments disclosed above may be combined with each other. It will further be appreciated that further embodiments are conceivable within the scope of the present disclosure and the claimed subject matter which are obvious and apparent to the skilled person.

### BRIEF DESCRIPTION OF THE DRAWINGS

The subject matter of the present disclosure is now to be explained in more detail by means of selected exemplary embodiments shown in the accompanying drawings.
Figure 1 shows an exemplary embodiment of a gas turbine engine.
Figure 2 shows a graph schematically outlining the effect of the method on the course of the temperature inside and downstream of the compressor of the gas turbine engine while the opening a variable inlet guide vane row to increase power output of the gas turbine engine.

It is understood that the drawings are highly schematic, and details not required for instruction purposes may have been omitted for the ease of understanding and depiction. It is further understood that the drawings show only selected, illustrative embodiments, and embodiments not shown may still be well within the scope of the herein disclosed and/or claimed subject matter.

### EXEMPLARY MODES OF CARRYING OUT THE TEACHING OF THE PRESENT DISCLOSURE

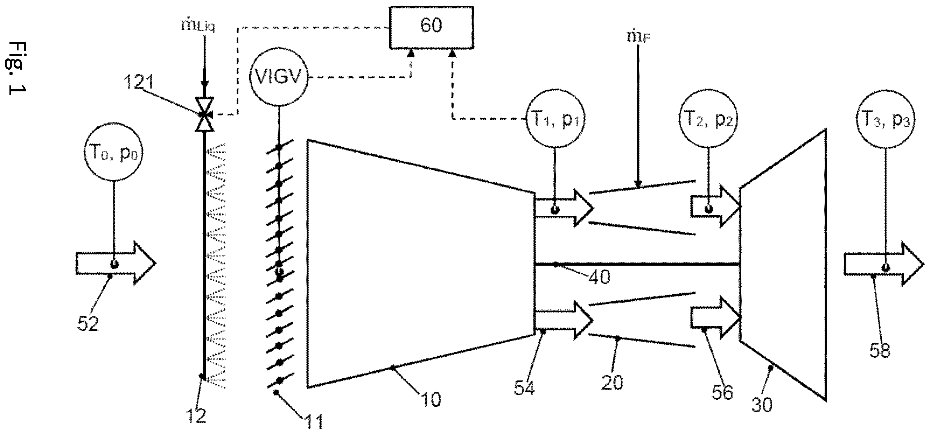

Figure 1 shows an exemplary embodiment of an air-breathing gas turbine engine. The gas turbine engine comprises compressor 10, combustor 20, and expansion turbine 30. Expansion turbine 30 is coupled to compressor 10 by a shaft 40 to drive the compressor and further a load, such as for instance a generator, which is not shown in the depiction, but familiar to the person having skill in the art. Combustor 20 is supplied with a fuel mass flow ṁ_{F}. Compressor 10 is equipped with a row of variable inlet guide vanes 11 having a variable or adjustable vane pitch, which allow control of the inlet volume flow to compressor 10 and thus of the working fluid mass flow of the gas turbine engine. The row of variable inlet guide vanes 11 thus is an inlet volume flow control appliance suitable to control a compressor gas mass flow. The pitch of the variable inlet guide vanes is denoted by VIGV. During operation, compressor 11 receives a flow of inlet air 52 at temperature T₀ and pressure p₀. Pressure p₀ may in common, while non-limiting, instances be at least essentially equal an ambient pressure, apart from potential pressure losses in air filters, silencers and/or other installations in an inlet duct. Compressor 10 compresses the flow of inlet air to a pressure p₁, which depends on the working fluid mass flow, flow characteristics of expansion turbine 30, the inlet temperature to the turbine and potential further influencing parameters. Due to the compression in compressor 10 the temperature of the fluid flowing through the compressor is raised to T₁. Compressor outlet temperature T1 increases with an increasing compressor pressure ratio p₁/p₀. The compressed air flow 54 is discharged from the compressor into combustor 20, where the fuel mass flow ṁ_{F} is combusted in the compressed air mass flow. Thereby, the temperature of flue gas flow 56 discharged from the combustor is raised to T₂, while the pressure due to inevitable losses of total pressure has dropped to p₂. Flue gas flow 56 is discharged into expansion turbine 30. In expansion turbine 30 the flue gas flow 56 is expanded to a pressure p₃, thereby generating useful power to drive compressor 10 and an external load. Due to the expansion in the expansion turbine the temperature of the exhaust flow 58 has decreased to T₃. The pressure p₃ downstream expansion turbine 30 may in non-nonlimiting instances be at least essentially equal to the ambient pressure, apart from pressure losses in installations downstream in an exhaust duct, such as tubing of a heat recovery steam generator, scrubbers and so forth. Likewise, as the skilled person will readily appreciate, expansion turbine outlet pressure p₃ may at least essentially equal the compressor inlet pressure p₀, apart from pressure losses in the exhaust duct and in the air intake. It is noted that the pressures and temperatures at the inlet and outlet of certain components of a gas turbine engine referred to are working fluid temperatures and pressures. Further, the pressures and temperatures referred to in the context of this application generally mean total pressures and temperatures, that is, the pressure and temperature of a fluid when it has isentropically been decelerated to standstill, including the dynamic pressure head of a fluid flow and the temperature which corresponds to the kinetic energy of a fluid flow. As will be appreciated, pressure p₃ is essentially fixed. Expansion turbine 30 acts as a throttle for the working fluid flowing through the expansion turbine. The skilled person will readily appreciate that the pressure ratio p₂/p₃ over the expansion turbine is positively correlated with the mass flow through the expansion turbine and the temperature T₂ at the inlet of the expansion turbine. That is, the pressure ratio increases when the mass flow and/or temperature are increased, and decreases when the mass flow and/or temperature are decreased. It will further be appreciated that turbine inlet temperature T₂ must be limited not to exceed an upper limit so as to avoid damage to the combustor, the first stages of the turbine and further hot gas path components. The skilled person will also readily appreciate that also temperature T3 at the turbine outlet will need to be maintained below a threshold so as to enable the use of cheaper materials in the last turbine stages and in the exhaust duct of the gas turbine engine. A maximum rated power output of the gas turbine engine is achieved when the variable inlet guide vanes of set so as to provide a maximum inlet volume flow to compressor 10 and the turbine inlet temperature T₂ is at the maximum permitted value. It will be appreciated that the rated maximum power output of the gas turbine engine depends on the temperature T₀ and the pressure p₀ at the compressor inlet, as those influence the working fluid mass flow when the compressor inlet volume flow is maximum. The power output of the gas turbine engine shown in the exemplary embodiment may further be enhanced in injecting a liquid agent, commonly water, into the compressor mass flow. In the exemplary embodiment an injection device 12 is provided upstream the row of variable inlet guide vanes to inject a liquid agent mass flow ṁ_{Liq} into inlet air flow 52. The liquid agent mass flow is controlled by control valve 121, which could also be a multitude of control valves for controlling liquid mass flow to various injection stages. When the injection of liquid agent is active, droplets of liquid agent evaporate while traveling through compressor 10 due to the heating of the air mass flow through the compressor while being compressed. The thus achieved internal cooling of the compressor results in a lower power consumption of the compressor, and thus the net power output of the gas turbine engine increases. Usually, the injection of liquid agent into the compressor mass flow is initiated when the gas turbine engine is operating at its rated maximum power output, that is, with the row of variable inlet guide vanes or other inlet volume flow control appliance set to operate the gas turbine engine with the maximum compressor inlet volume flow.

During a normal operation mode at low power outputs the variable inlet guide vanes are closed, i.e. the compressor inlet volume flow is minimum, To increase the power output of the gas turbine engine on the one hand the turbine inlet temperature may be increased in increasing the fuel mass flow ṁ_{F} at constant air mass flow. On the other hand, the setting of the inlet volume flow control appliance may be changed so as to increase the air mass flow, and at the same time increasing the fuel mass flow. This yields an increasing power output of the gas turbine engine while the turbine inlet temperature T₂ may be maintained constant. Increasing the compressor inlet volume flow or air mass flow is correlated with a strong increase of the pressure ratio of the gas turbine cycle, that is, pressures p₁ and p₂ and hence the pressure ratios of the compressor and of the turbine increase strongly. The increasing pressure ratio needs a strong increase of the compressor discharge temperature T₁. Along with the increase of the compressor pressure ratio and compressor discharge temperature compressor components inside the compressor heat up, in particular in the downstream compressor stages. The blade and vane airfoils inside the compressor have a large surface exposed to the working fluid flow compared to the mass, and thus heat up fastest with an increasing temperature of the surrounding working fluid flow. Along with heating up, the airfoils are subject to thermal expansion which is by far faster than the thermal expansion of the compressor housing and shaft. As on the other hand gaps between the airfoil tips and opposed structures are designed sufficiently small so as to minimize leakage flows, the disbalance in thermal growth between the airfoils on the one hand and the housing and rotor on the other hand may result in contact between airfoil tips and counterpart components. The thus resulting rubbing may result in damages and/or in enlarged gaps, associated with larger leakage flows and performance degradations. The issue is the more relevant the higher the gradient of the pressure p₁ at the compressor outlet is. To remedy this situation, the gas turbine engine of the exemplary embodiment is equipped with a control device 60 which receives signals representative of, for instance, the pitch VIGV of the variable inlet guide vanes and/or the pressure p₁ at the compressor outlet and/or the temperature T₁ at the compressor outlet. Control device 60 outputs a control signal to the liquid mass flow control valve or the liquid mass flow control valves 121. Control device 60 is configured to control, via control valve or control valves 121, the mass flow ṁ_{Liq} of liquid agent provided to the compressor gas mass flow. For one instance, control device 60 may be configured to control the mass flow ṁ_{Liq} of liquid agent dependent on the pitch VIGV of the variable inlet guide vanes 11. Control device 60 may be configured to increase the mass flow of liquid agent while the compressor inlet mass flow control appliance 11 increases the compressor inlet volume flow and consequently the compressor gas mass flow. As outlined above, due to the fluid mechanic characteristics of the turbine 30, pressure p₁ at the compressor outlet increases. In injecting liquid agent into the compressor gas mass flow internal cooling of the compressor is effected, and the increase of temperature T₁ at the compressor outlet, and accordingly inside the compressor, is at least slowed down. The disbalance in thermal growth of components inside the compressor is thus diminished, and the risk of component rubbing is at least significantly reduced. The mass flow ṁ_{Liq} of liquid agent may be controlled as a continuous function of the setting VIGV of the inlet volume flow control appliance 11, but may also be controlled discontinuously, in steps. For instance, various stages of a liquid agent injection appliance may be operated with an on/off control, and may one after the other be switched on with an increasing compressor inlet volume flow. As the mass flow of liquid agent is controlled as a function of the setting VIGV of the inlet volume flow control appliance 11, i.e. in the present instance the pitch of the variable inlet guide vanes, the method comprises adding a mass flow of a liquid agent to the compressor gas mass flow while the inlet volume flow control appliance is set to operate the gas turbine engine with a compressor inlet volume flow below a maximum compressor inlet volume flow. In certain embodiments of the method, the injection of liquid agent remains switched on until the compressor inlet volume flow or compressor outlet pressure is reduced again. In other embodiments, however, the mass flow of liquid agent may be gradually reduced after a delay time once a stationary power output has been reached.

The power output may be either an absolute Megawatts power output or a relative power output related to a rated power output of the gas turbine engine under the actually present ambient conditions. As the skilled person will readily appreciate, the rated power output decreases with an increasing temperature T₀ of the inlet air flow 52. Thus, for instance at warming up ambient conditions the inlet volume flow control appliance may open and increase the inlet volume flow even when the absolute Megawatts power output is constant. That is, the mass flow ṁ_{Liq} of liquid agent may change even if the absolute Megawatts power output of the gas turbine engine is constant.

Further embodiments of controlling the mass flow of liquid agent are set forth in the claims.

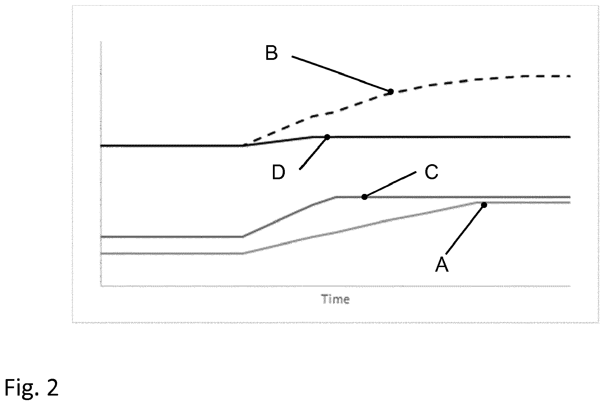

Figure 2 is a graph outlining the effect of providing an increasing mass flow of liquid agent into the compressor mass flow while increasing the compressor inlet volume flow to increase the power output of the gas turbine engine. While the horizontal axis represents time, the vertical axis represents a temperature in or downstream of the compressor, a setting of a volume flow control appliance, and a liquid agent mass flow, respectively. The line denoted at "A" represents the setting of a volume flow control appliance, wherein an increasing value of said setting is correlated with an increasing compressor inlet volume flow, and hence, provided ambient conditions remain at least essentially constant, an increasing compressor mass flow. The increasing compressor mass flow generally results in an increasing pressure ratio, due to the flow characteristics of the downstream expansion turbine, in particular if the mass flow of fuel is controlled to maintain the turbine inlet temperature constant. Without any control of the liquid agent mass flow the gas temperature inside or downstream of the compressor accordingly increases, as represented by the line at "B". Accordingly, airfoils inside the compressor, due to their comparatively small thermal inertia and intense heat exchange with the flow inside the compressor, heat up with only a small time delay. The person having skill in the art will readily appreciate that during the operation of a gas turbine engine the increase of the mass flow and accordingly the related increase of the temperature inside or after the compressor may appear during a comparatively short timescale of some minutes. The housing and rotor of the compressor will heat up significantly slower than the airfoils, due to the higher thermal inertia and the less intense heat transfer with the gas flowing inside the compressor, compared to the airfoils. Issues like the ones initially mentioned, including rubbing of airfoils, may occur, with the initially described detrimental effects on engine performance and efficiency. Thus, according to the herein disclosed method, a mass flow of liquid agent added to the compressor mass flow is increased at least during a part of the process of actuating the volume flow control appliance and increasing the compressor mass and volume flow, as illustrated by the line denoted at "C". The line at "C" schematically and qualitatively illustrates a mass flow of liquid agent added to the compressor mass flow, which is increased during approximately 50 percent of the time during which the compressor mass and volume flow is increased. As a result, the increase of the temperature inside and downstream of the compressor is largely reduced, as shown by the line denoted at "D". Thus, in increasing a mass flow of liquid agent added to the compressor mass flow at least during a part of the process of adjusting the volume control appliance to increase the compressor inlet volume flow results in largely decreased temperature gradients over time and helps to improve long time performance, efficiency and reliability of the engine.

While the subject matter of the disclosure has been explained by means of exemplary embodiments, it is understood that these are in no way intended to limit the scope of the claimed invention. It will be appreciated that the claims cover embodiments not explicitly shown or disclosed herein, and embodiments deviating from those disclosed in the exemplary modes of carrying out the teaching of the present disclosure will still be covered by the claims.

## Claims

1. A method for operating a gas turbine engine, the gas turbine engine comprising an inlet volume flow control appliance (11) suitable to control a compressor (10) gas mass flow, the method comprising operating the gas turbine engine with the inlet volume flow control appliance (11) set to operate the gas turbine engine with a compressor inlet volume flow below a maximum compressor inlet volume flow and adding a mass flow (ṁ_{Liq}) of a liquid agent to a compressor gas mass flow while the inlet volume flow control appliance is set to operate the gas turbine engine with a compressor inlet volume flow below the maximum compressor inlet volume flow,
**characterized in** adjusting the volume flow control appliance (11) to change the compressor inlet volume flow and controlling the mass flow of liquid agent at least during a part of the process of adjusting the volume flow control appliance, wherein controlling the mass flow of liquid agent comprises at least one of increasing the mass flow of liquid agent (ṁ_{Liq}) added to the compressor gas mass flow when the inlet volume flow control appliance (11) is adjusted to increase the compressor inlet volume flow, and/or decreasing the mass flow of liquid agent (ṁ_{Liq}) added to the compressor gas mass flow when the inlet volume flow control appliance (11) is adjusted to decrease the compressor inlet volume flow, wherein.

2. The method according to any of the preceding claims, **characterized in** controlling the mass flow (ṁ_{Liq}) of liquid agent added to the compressor air mass flow while changing the power output of the gas turbine engine.

3. The method according to the preceding claim, **characterized in that** controlling the mass flow (ṁ_{Liq}) of liquid agent provided to the compressor air mass flow while changing the power output of the gas turbine engine comprises at least one of increasing the mass flow of liquid agent provided to the compressor air mass flow when increasing the power output of the gas turbine engine and/or decreasing the mass flow of liquid agent provided to the compressor air mass flow when decreasing the power output of the gas turbine engine.

4. The method according to any of the preceding claims, **characterized in that** the power output of the gas turbine engine is at least one of an absolute Megawatts power output and a relative power output related to a rated power output of the gas turbine engine under the actually present ambient conditions.

5. The method according to any of the preceding claims, **characterized in that** providing the liquid agent to a compressor gas mass flow comprises providing the liquid agent to the compressor gas mass flow upstream a first row of rotating compressor blades.

6. The method according to any of the preceding claims, **characterized in that** the inlet volume flow control appliance (11) comprises at least one row of variable guide vanes.

7. The method according to any of the preceding claims, wherein changing the power output of the gas turbine engine comprises changing the setpoint of the inlet volume flow control appliance (11) so as to change the compressor inlet volume flow (52) with the same sign as the change of the power output.

8. The method according to any of the preceding claims, **characterized in** controlling the mass flow (ṁ_{Liq}) of the liquid agent to a compressor gas mass flow dependent upon at least one of the setpoint and/or actual setting (VIGV) of the inlet volume flow control appliance (11).

9. The method according to any of the preceding claims, **characterized in** controlling the mass flow (ṁ_{Liq}) of the liquid agent to the compressor gas mass flow dependent upon at least one of:
a compressor discharge pressure (p₁) and/or a compressor pressure ratio (p₁/p₀), and/or
a gradient of the compressor discharge pressure and/or compressor pressure ratio.

10. The method according to any of the preceding claims, **characterized in** determining at least one temperature (T₁) inside the compressor (10) or downstream the compressor and upstream a combustor, (20) and controlling the mass flow (ṁ_{Liq}) of the liquid agent provided to the compressor gas mass flow dependent upon at least one of said temperatures and/or a gradient of at least one of said temperatures.

11. The method according to any of the preceding claims, **characterized in** controlling the mass flow (ṁ_{Liq}) of the liquid agent continuously and/or in discrete steps.

12. The method according to any of the preceding claims, **characterized in** gradually decreasing the mass flow of the liquid agent after a delay time once a stationary power output has been reached.

13. A gas turbine engine comprising a compressor (10) and an appliance (12) for providing a mass flow (ṁ_{Liq}) of liquid agent to a compressor gas mass flow, **characterized in that** a control device (60) is provided and configured to perform a method according to any preceding claim.

14. The gas turbine engine according to the preceding claim, further comprising an inlet volume flow control appliance (11) suitable to control a compressor gas mass flow.

15. The gas turbine engine according to the preceding claim, **characterized in that** the inlet volume flow control appliance comprises a row of inlet guide vanes with variable pitch.
